Europäisches Patentamt

European Patent Office

Office européen des brevets

(11) Veröffentlichungsnummer: **0 193 711**
**B1**

(12) **EUROPÄISCHE PATENTSCHRIFT**

(45) Veröffentlichungstag der Patentschrift:
23.05.90

(51) Int. Cl.⁵: **G06F 11/10**

(21) Anmeldenummer: **86100514.8**

(22) Anmeldetag: **16.01.86**

(54) Schaltungsanordnung zur Funktionsüberwachung eines arithmetische Operationen ausführenden Rechenwerkes anhand von Paritätsbits.

(30) Priorität: **25.01.85  DE 3502544**

(43) Veröffentlichungstag der Anmeldung:
**10.09.86 Patentblatt 86/37**

(45) Bekanntmachung des Hinweises auf die Patenterteilung:
**23.05.90 Patentblatt 90/21**

(84) Benannte Vertragsstaaten:
**AT BE CH DE FR GB IT LI NL SE**

(56) Entgegenhaltungen:
DE-A- 2 262 002

IBM TECHNICAL DISCLOSURE BULLETIN, Band 23,
Nr. 12, Mai 1981, Seiten 5498-5502, New York, US; P.
KALANDRA et al.: "Parity predict of a sum"
IBM TECHNICAL DISCLOSURE BULLETIN, Band 17,
Nr. 2, Juli 1974, Seiten 540-542, New York, US; P.A.
KUCKEIN: "High-speed parity predictor for adder"

(73) Patentinhaber: **Siemens Aktiengesellschaft,
Wittelsbacherplatz 2, D-8000 München 2(DE)**

(72) Erfinder: **Huss, Rolf-Rüdiger, Dr.-Ing., Lindacher
Strasse 8, D-8000 München 60(DE)**

## Beschreibung

Die Erfindung bezieht sich auf eine Schaltungsanordnung zur Funktionsüberwachung eines arithmetische Operationen ausführenden Rechenwerkes entsprechend den Merkmalen des Oberbegriffs des Patentanspruches 1. Eine derartige Anordnung ist z.B. aus der DE-OS 22 62 002 bekannt.

Die Möglichkeit, in einem Rechner auftretende Fehler mit relativ geringem Aufwand zu erkennen, spielt bei der Entwicklung von zuverlässig arbeitenden Rechnern eine erhebliche Rolle.

Am häufigsten wird für die Fehlerüberwachung die sogenannte Paritätsprüfung angewandt. Den einzelnen Dateneinheiten wird dabei z.B. jeweils ein ergänzendes Paritätsbit beigeordnet, das die Anzahl der Stellen eines Binärwortes mit dem Wert 1 zu einer stets geraden oder ungeraden Anzahl entsprechend einer geraden oder ungeraden Parität ergänzt.

Nach jedem Übertragungs- oder Speichervorgang wird aus den Datenbits ein neues Paritätsbit gebildet und durch dessen Vergleich mit dem beigeordneten Paritätsbit festgestellt, ob die Datenbits inzwischen verfälscht worden sind oder nicht.

Bei der Überwachung von logischen oder arithmetischen Verknüpfungen von Operandendaten zu Ergebnisdaten versagt jedoch die Paritätssicherung, da die gleichartige Verknüpfung der Paritätsbits im allgemeinen nicht das dem Ergebnisdatum entsprechende Paritätsbit ergibt.

Als Beispiel diene die Addition zweier Operanden und die Addition der zugehörigen Paritätsbits bei gerader Parität.

```
      Operand A:     0 1 0 1    Paritätsbit A:      0

  +   Operand B:     1 0 0 1  + Paritätsbit B:      0

      Op.-Summe      1 1 1 0
                                Summe der Operan-
      Paritätsbit der Summe: 1  denparitätsbits:    0
```

Die Summe der Operandenparitätsbits ist in diesem Fall nicht identisch mit dem Paritätsbit der Operandensumme.

Zur Funktionsüberwachung eines Rechenwerkes muß also außerhalb des Rechenwerkes auf gesonderte Weise ein Paritätsbit erzeugt werden, das dann auf Gleichheit mit dem vom Ergebniswort abgeleiteten Paritätsbit geprüft werden kann.

Bei der aus der DE-OS 2 262 002 bekannten Anordnung wird zur Prüfung arithmetischer Operationen das Ergebnisparitätsbit aus den Operandendaten und -paritätsbits durch exklusive ODER-Verknüpfungen nach der Gleichung $P_S = P_A \# P_B \#_{CIN}$ ermittelt, wobei $P_S$ das Paritätsbit des Ergebniswortes, $P_A$ das Paritätsbit des ersten Operanden, $P_B$ das Paritätsbit des zweiten Operanden und $P_{CIN}$ das Paritätsbit der Eingangsüberträge aller Bitstellen bedeuten. Dabei muß der Eingangsübertrag jeder Bitstelle gebildet werden, was einen erheblichen Aufwand, insbesondere an zusätzlichen Gatterfunktionen, erfordert.

Aufgabe der Erfindung ist es daher, eine Schaltungsanordnung der eingangs genannten Art so auszubilden, daß sich die Anzahl der zur eigenständigen Erzeugung des Ergebnisparitätsbits aufzuwendenden Gatterfunktionen trotz modularer Erweiterbarkeit wesentlich verringert.

Erfindungsgemäß wird diese Aufgabe durch die Merkmale im kennzeichnenden Teil des Patentanspruchs 1 gelöst.

Bei der erfindungsgemäßen Lösung der Aufgabe wird bei der Erzeugung des Ergebnisparitätsbits $P_S$ aus den Operandenparitätsbits $P_A$ und $P_B$ und dem Paritätsbit $P_{CIN}$ der Eingangsüberträge $CIN_i$ aller Bitstellen auf die Bildung der Eingangsüberträge jeder zweiten Bitstelle verzichtet, was die beabsichtigte Verringerung der Gatterfunktionen zur Folge hat. Ausgehend vom vorhandenen niederwertigsten Eingangsübertrag $CIN_0$ sind bei insgesamt N Bitstellen lediglich noch $N/2 - 1$ Eingangsüberträge zu bilden. Jeder Eingangsübertrag wird dabei unmittelbar aus den Steuersignalen $P_i$ und $G_i$ der jeweils niederwertigeren Operandenbitstellen sowie aus dem vorhandenen niederwertigsten Eingangsübertrag $CIN_0$ abgeleitet.

Das Bildungsgesetz für die benötigten Eingangsüberträge $CIN_i$ lautet, wobei in herkömmlicher Weise ∧ eine UND-Verknüpfung und ∨ eine ODER-Verknüpfung bedeutet:

$$CIN_i = \left[ CIN_0 \wedge \bigwedge_{j=0}^{j=i-1} P_j \right] \vee \left[ \bigvee_{m=0}^{m=i-1} \bigwedge_{n=1}^{n=i-1>m} G_m \wedge P_n \right]$$

$$\text{mit} \quad \bigwedge_{j=0}^{j=i-1} P_j = P_0 \wedge P_1 \wedge P_2 \wedge \ldots \wedge P_{(i-2)} \wedge P_{(i-1)}$$

$$\text{und} \quad \bigvee_{m=0}^{m=i-1} G_m = G_0 \vee G_1 \vee G_2 \vee \ldots \vee G_{(i-2)} \vee G_{(i-1)}$$

Die Steuersignale $P_i$ und $G_i$ jeder Bitstelle werden direkt aus den Operandenbits $A_i$ und $B_i$ erzeugt und stehen eine Gatterlaufzeit nach Bereitstellung der Operanden parallel zur Verfügung. Daher kann auch die Ableitung der benötigten Eingangsüberträge sowie die sich anschließende Nachbildung der N/2 Exklusiv-ODER-Verknüpfungen zweier benachbarter Eingangsüberträge jeweils in parallel ablaufenden Verknüpfungsschritten erfolgen.

Für die Nachbildung der exklusiven ODER-Verknüpfungen zweier benachbarter Eingangsüberträge nutzt die Erfindung die Tatsache, daß ausgehend vom vorhandenen niederwertigsten Eingangsübertrag $CIN_0$ bzw. vom durch geeignete Verknüpfung jeweils ermittelten Eingangsübertrag $CIN_i$ der nachfolgende Eingangsübertrag $CIN_{i+1}$ in einfacher Weise durch Verknüpfung mit den zugehörigen Steuersignalen $P_i$ und $G_i$ ableitbar ist, und zwar entsprechend der Beziehung

$CIN_{(i+1)} = [CIN_i \wedge (A_i \vee B_i)] \vee (A_i \wedge B_i) = (CIN_i \wedge P_i) \vee G_i$ mit i = 0, 1, 2, ..., N-2, N-1. Das führt zum Ansatz:

$CIN_{(i+1)} \# CIN_i = (CIN_{(i+1)} \wedge \overline{CIN_i}) \vee (CIN_{(i+1)} \wedge \overline{CIN_i})$

wobei in herkömmlicher Weise # eine exklusive ODER-Verknüpfung bedeutet und woraus schließlich unter Beachtung der wegen $P_i = A_i \vee B_i$ und $G_i = A_i \wedge B_i$ gegebenen Beziehung $\overline{P_i} \wedge \overline{G_i} = \overline{P_i}$ folgende Identität herleitbar ist:

$CIN_{(i+1)} \# CIN_i = (CIN_i \wedge \overline{P_i}) \vee (\overline{CIN_i} \wedge G_i)$

Gemäß einer Weiterbildung der Erfindung wird die die exklusive ODER-Verknüpfung zweier benachbarter Eingangsüberträge ersetzende Verknüpfungsbeziehung entsprechend der rechten Seite der obigen Identitätsformel durch einen Multiplexer realisiert, dessen Arbeitsweise durch die Gleichung $Y = (\overline{C} \wedge X_1) \vee (C \wedge X_2)$ bestimmt ist, in der C das Einstellsignal sowie $X_1$ und $X_2$ die in Abhängigkeit vom Einstellsignal C auf den Ausgang Y durchzuschaltenden Signale bedeuten.

Einzelheiten der Erfindung seien nachfolgend anhand eines in der Zeichnung dargestellten Ausführungsbeispieles näher erläutert. Im einzelnen zeigen

FIG 1 ein Übersichtsschaltbild zur Bildung des Ergebnisparitätsbits $P_S$ gemäß der Erfindung und
FIG 2 bis 4 Schaltbilder der vier in FIG 1 verwandten Schaltungsbausteine.

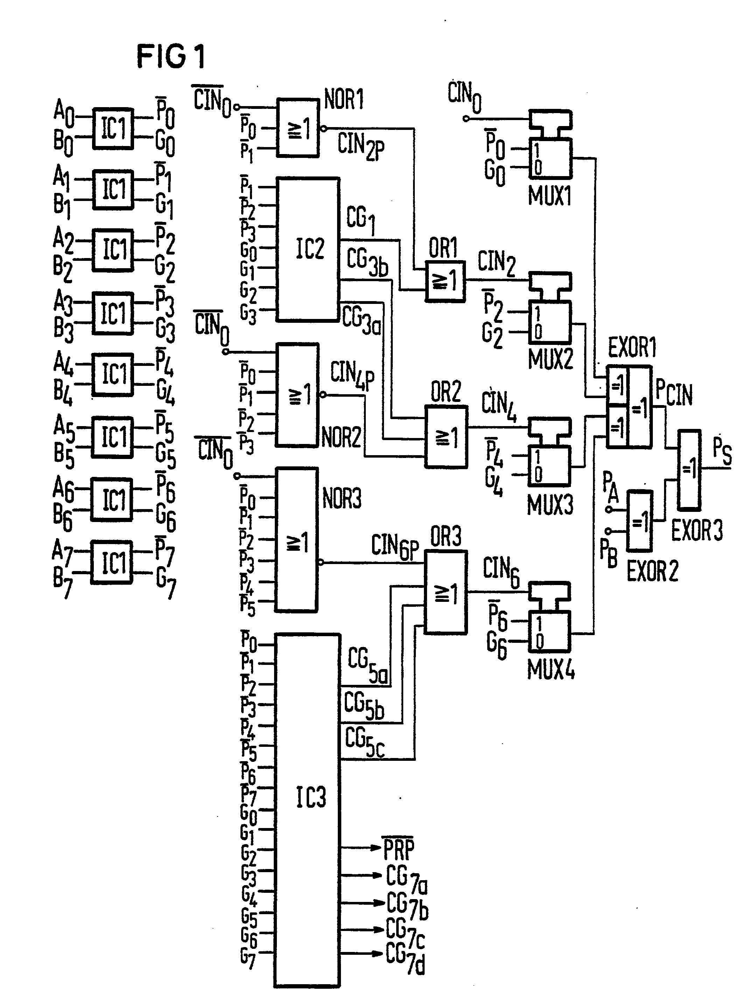

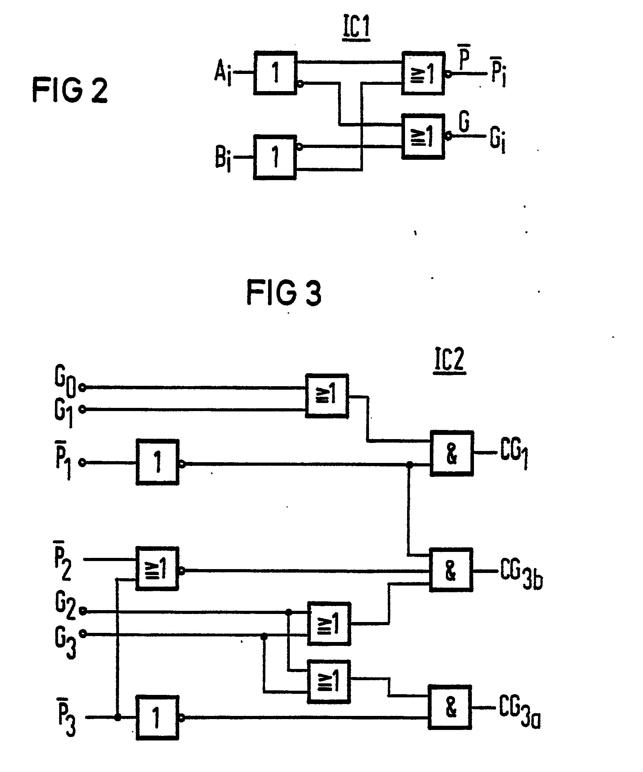

Das in FIG 1 gezeigte Übersichtsschaltbild ist entsprechend den verschiedenen Verknüpfungsstufen in vier Schaltungsebenen gegliedert, die wegen der parallelen Verarbeitung jeweils eine Reihe von Signalen gleicher Verknüpfungsstufe liefern. In der ersten Verknüpfungsstufe werden je Operandenpaar $A_i$ und $B_i$ die beiden Steuersignale $P_i$ und $G_i$ mit Hilfe eines Schaltungsbausteines IC1 gemäß FIG 2 erzeugt, an dessen Eingängen die Operanden $A_i$ und $B_i$ anliegen und an dessen beiden Ausgängen die Steuersignale $\overline{P_i}$ und $G_i$ als Ergebnis zur Verfügung stehen. Dabei sind Operanden mit jeweils acht Bitstellen zugrunde gelegt.

In den folgenden beiden Verknüpfungsstufen erfolgt ausgehend vom Anfangseingangsübertrag $CIN_0$ die Bildung der jeweils übernächsten Eingangsüberträge $CIN_2$, $CIN_4$ und $CIN_6$. Nach dem vorangehend bereits beschriebenen Bildungsgesetz setzt sich ein Eingangsübertrag $CIN_i$ aus der ODER-Verknüpfung einzelner UND-Verknüpfungen der bereitgestellten Steuersignale zusammen. Die für die Bildung der einzelnen Eingangsüberträge $CIN_i$ notwendigen Verknüpfungen sind in der nachfolgenden Tabelle dargestellt:

$$CIN_0 = CIN_0$$

$$CIN_2 = \underbrace{(CIN_0 \wedge P_0 \wedge P_1)}_{CIN_{2P}} \vee \underbrace{(G_0 \wedge P_1) \vee G_1}_{CG_1}$$

$$CIN_4 = \underbrace{(CIN_0 \wedge P_0 \wedge P_1 \wedge P_2 \wedge P_3)}_{CIN_{4P}} \vee \underbrace{(G_0 \wedge P_1 \wedge P_2 \wedge P_3) \vee (G_1 \wedge P_2 \wedge P_3)}_{CG_{3b}}$$

$$\vee \underbrace{(G_2 \wedge P_3) \vee G_3}_{CG_{3a}}$$

$$CIN_6 = \underbrace{(CIN_0 \wedge P_0 \wedge P_1 \wedge P_2 \wedge P_3 \wedge P_4 \wedge P_5)}_{CIN_{6P}}$$

$$\vee \underbrace{(G_0 \wedge P_1 \wedge P_2 \wedge P_3 \wedge P_4 \wedge P_5) \vee (G_1 \wedge P_2 \wedge P_3 \wedge P_4 \wedge P_5)}_{CG_{5c}}$$

$$\vee \underbrace{(G_2 \wedge P_3 \wedge P_4 \wedge P_5) \vee (G_3 \wedge P_4 \wedge P_5)}_{CG_{5b}} \vee \underbrace{(G_4 \wedge P_5) \vee G_5}_{CG_{5a}}$$

$$CIN_8 = \underbrace{(CIN_0 \wedge P_0 \wedge P_1 \wedge P_2 \wedge P_3 \wedge P_4 \wedge P_5 \wedge P_6 \wedge P_7)}_{CIN_{8P}}$$

$$\vee \underbrace{(G_0 \wedge P_1 \wedge P_2 \wedge P_3 \wedge P_4 \wedge P_5 \wedge P_6 \wedge P_7) \vee (G_1 \wedge P_2 \wedge P_3 \wedge P_4 \wedge P_5 \wedge P_6 \wedge P_7)}_{CG_{7d}}$$

$$\vee \underbrace{(G_2 \wedge P_3 \wedge P_4 \wedge P_5 \wedge P_6 \wedge P_7) \vee (G_3 \wedge P_4 \wedge P_5 \wedge P_6 \wedge P_7)}_{CG_{7c}}$$

$$\vee \underbrace{(G_4 \wedge P_5 \wedge P_6 \wedge P_7) \vee (G_5 \wedge P_6 \wedge P_7)}_{CG_{7d}} \vee \underbrace{(G_6 \wedge P_7) \vee G_7}_{CG_{7a}}$$

Zur Bildung jedes Eingangsübertrages können daher in der zweiten Verknüpfungsstufe jeweils parallel die dargestellten UND-Verknüpfungen und anschließend in der dritten Verknüpfungsstufe deren ODER-Verknüpfungen gebildet werden.

Im vorliegenden Beispiel wird jedoch von dieser Vorgehensweise etwas abgewichen. Um vorhandene Schaltungsbausteine günstig nutzen zu können, erfolgt ein Teil der normalerweise für die dritte Verknüpfungsstufe vorgesehenen ODER-Verknüpfungen bereits in der zweiten Verknüpfungsstufe, was zu den in der Tabelle gesondert gekennzeichneten Verknüpfungskomponenten $CG_1$, $CG_{3a}$, $CG_{3b}$, $CG_{5a}$, $CG_{5b}$ und $CG_{5c}$ führt.

Bei der in die Tabelle aufgenommenen Verknüpfungsformel für den Eingangsübertrag $CIN_8$, der als Ausgangsübertrag bei kaskadenförmiger Erweiterung auf mehr als acht Bitstellen, zum Beispiel bei Verdopplung auf 16 Bitstellen, benötigt wird, gilt Analoges für die Signalkomponenten $CG_{7a}$, $CG_{7b}$, $CG_{7c}$ und $CG_{7d}$.

In der zweiten Verknüpfungsstufe werden also die Komponenten $CIN_{2P}$ und $CG_1$ des Eingangsüber-

trags $CIN_2$, die Komponenten $CG_{3a}$, $CG_{3b}$ und $CIN_{4P}$ des Eingangsübertrages $CIN_4$ und die Komponenten $CG_{5a}$, $CG_{5b}$, $CG_{5c}$ und $CIN_{6P}$ des Eingangsübertrages $CIN_6$ gebildet.

Der von außerhalb der Schaltungsanordnung zugeführte und zuvor negierte Eingangsübertrag $\overline{CIN_0}$ wird entsprechend zusammen mit den Steuersignalen $\overline{P_0}$ und $\overline{P_1}$ den drei Eingängen eines ersten NOR-Gliedes NOR1, zusammen mit den Steuersignalen $\overline{P_0}$, $\overline{P_1}$, $\overline{P_2}$ und $\overline{P_3}$ den fünf Eingängen eines zweiten NOR-Gliedes NOR2 sowie zusammen mit den Steuersignalen $\overline{P_0}$ bis $\overline{P_5}$ den sieben Eingängen eines dritten NOR-Gliedes NOR3 zugeführt. Am Ausgang dieser drei NOR-Glieder stehen damit die jeweils ersten Komponenten $CIN_{2P}$, $CIN_{4P}$ und $CIN_{6P}$ für die Eingangsüberträge als Ergebnis der zweiten Verknüpfungsstufe zur Verfügung.

Die übrigen Komponenten werden von den Schaltungsbausteinen IC2 und IC3 gebildet. Dazu werden den Eingängen des Schaltungsbausteines IC2 die Steuersignale $\overline{P_1}$, $\overline{P_2}$ und $\overline{P_3}$ und $G_0$ bis $G_3$ zugeführt und an den drei Ausgängen CG1 für den Eingangsübertrag $CIN_2$ sowie die Komponenten $CG_{3a}$ und $CG_{3b}$ für den Eingangsübertrag $CIN_4$ erhalten. Den Eingängen des Schaltungsbausteins IC3 werden die Steuersignale $\overline{P_0}$ bis $\overline{P_7}$ und G0 bis $G_7$ zugeführt und an den Ausgängen die Komponenten $CG_{5a}$, $CG_{5b}$ und $CG_{5c}$ für den Eingangsübertrag $CIN_6$ erhalten.

In der dritten Verknüpfungsstufe werden dann aus den einzelnen Komponenten die Eingangsüberträge $CIN_2$, $CIN_4$ und $CIN_6$ gebildet. Dazu werden die Komponenten $CIN_{2P}$ und CG1 den beiden Eingängen eines ersten ODER-Gliedes OR1 zur Bildung des Eingangsübertrags $CIN_2$, die Komponenten $CG_{3a}$, $CG_{3b}$ und $CIN_{4P}$ den Eingängen eines zweiten ODER-Gliedes OR2 zur Bildung des Eingangsübertrages $CIN_4$ und die Komponenten $CG_{5a}$, $CG_{5b}$ $CG_{5c}$ und $CIN_{6P}$ den vier Eingängen eines dritten ODER-Gliedes OR3 zur Bildung des Eingangsübertrags $CIN_6$ zugeführt. Damit stehen nach der dritten Verknüpfungsstufe zusammen mit dem von außen zugeführten Anfangseingangsübertrag $CIN_0$ alle vier benötigten geradzahligen Eingangsüberträge zur weiteren Verarbeitung zur Verfügung.

In der vierten Verknüpfungsstufe wird aus jedem geradzahligen Eingangsübertrag $CIN_0$, $CIN_2$, $CIN_4$ und $CIN_6$ sowie aus den Steuersignalen $P_i$ und $G_i$ der jeweils zugehörigen Bitstelle die exklusive ODER-Verknüpfung des jeweils vorliegenden Eingangsübertrags mit dem nicht vorliegenden nächsthöheren Eingangsübertrag nachgebildet. Dazu wird jeder geradzahlige Eingangsübertrag jeweils dem steuernden Eingang eines Multiplexers MUX1, MUX2, MUX3, bzw. MUX4 zugeführt, während das derselben Bitstelle jeweils zugehörige Steuersignal $\overline{P_i}$ auf den Signaleingang 1 und das jeweils zugehörige Steuersignal $G_i$ auf den Signaleingang 0 der einzelnen Multiplexer einwirken.

Damit steht an jedem Ausgang der vier Multiplexer nach der vierten Verknüpfungsstufe das Ergebnis der exklusiven ODER-Verknüpfung jeweils zweier benachbarter Eingangsüberträge $CIN_i$ und $CIN_{(i+1)}$ zur Verfügung. Die Ausgangssignale der Multiplexer werden dann einem die gemeinsame exklusive ODER-Verknüpfung dieser Signale bildenden Schaltglied EXOR1 zugeführt, dessen Ausgang das Paritätsbit $P_{CIN}$ aller Eingangsüberträge liefert.

Die Operanden-Paritätsbit $P_A$ und $P_B$ werden den Eingängen eines zweiten exklusiven ODER-Gliedes EXOR2 zugeführt, dessen Ausgang zusammen mit dem Ausgang des ersten exklusiven ODER-Gliedes EXOR1 mit den beiden Eingängen eines dritten exklusiven ODER-Gliedes EXOR3 verbunden ist, an dessem Ausgang schließlich das Paritätsbit $P_S$ des Ergebnisses erhalten wird.

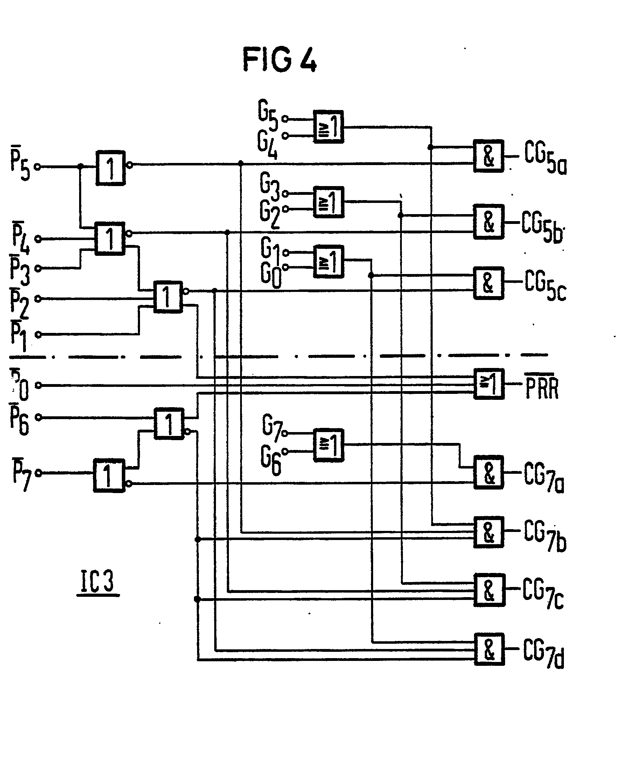

Die Schaltungsbausteine IC1, IC2 und IC3 sind, wie FIG 2 bis FIG 4 zeigen, aus einfachen Signalinvertern sowie UND- und ODER-Gliedern aufgebaut. Bei den Schaltungsbausteinen von FIG 3 und FIG 4 ist zur Verwirklichung der geforderten Verknüpfungen berücksichtigt, daß die Signalkombination $P_i = 0$ und $G_i = 1$ wegen $P_i = A_i \vee B_i$ und $G_i = A_i \wedge B_i$ nicht möglich ist. Demzufolge kann die Verknüpfung $(G_x \wedge P_y) \vee G_y$ durch die zum selben Ergebnis führende Verknüpfung $P_y \wedge (G_x \vee G_y)$ ersetzt werden, um die Komponenten $CG_1$, $CG_{3a}$, $CG_{5a}$ usw. zu erhalten. Analoges gilt für die übrigen Gruppensignale CG..., da unter der gegebenen Voraussetzung allgemein gilt:

$$(P_c \wedge P_d \wedge P_e \wedge ... \wedge P_m \wedge G_b) \vee (P_d \wedge P_e \wedge ... \wedge P_m \wedge G_c)$$
$$= (P_c \wedge P_d \wedge P_e ... \wedge P_m) \wedge (G_b \vee G_c).$$

Wie bereits aus FIG 1 ersichtlich ist, liefert der Schaltungsbaustein IC3 vier weitere Gruppensignale $CG_{7a}$, $CG_{7b}$, $CG_{7c}$ und $CG_{7d}$ sowie das Signal $\overline{PRP}$. Diese Gruppensignale sind zur Bildung des Eingangsübertrages $CIN_8$ nach der Tabelle notwendig, der bei den unterstellten insgesamt acht Operandenbitstellen dem Ausgangsübertrag entspricht. Das Signal $\overline{PRP}$ ist dabei das Ergebnissignal der ODER-Verknüpfung aller Steuersignale $\overline{P_i}$, so daß dessen Negation der UND-Verknüpfung dieser Steuersignale entspricht. Durch eine weitere UND-Verknüpfung mit dem anfänglichen Eingangsübertrag $CIN_0$ erhält man die noch fehlende Komponente $CIN_{8P}$ für den Eingangsübertrag $CIN_8$ in der Tabelle und durch eine weitere ODER-Verknüpfung schließlich den Eingangsübertrag CIN8 als Ausgangsübertrag.

Anhand dieser zusätzlichen Signale ist eine kaskadenartige Ausdehnung der Anordnung von acht Bitstellen auf ein Vielfaches von acht Bitstellen durch ein Aneinanderreihen mehrerer derartiger Anordnungen von FIG 1 möglich, wobei der Ausgangsübertrag den neuen anfänglichen Eingangsübertrag $CIN_0'$ für die nachfolgende Anordnung bildet, ohne daß neben den drei Schaltungsbausteinen IC1 bis IC3 noch weitere umfangreichere Schaltungsbausteine vorgesehen werden müssen. Der für diese zusätzlichen fünf Signale benötigte Verknüpfungsteil ist in FIG 4 unterhalb der strichpunktierten Linie dargestellt, wobei bereits in der oberen Hälfte der Schaltungsanordnung vorliegende Teilverknüpfungen mitausgenutzt werden.

Bei der in FIG 1 gezeigten Gesamtschaltung kann das exklusive ODER-Glied EXOR3 am Ausgang entfallen, wenn der Ausgang des Multiplexers MUX1 auf den Steuereingang eines weiteren Multiplexers einwirkt, dessen beiden Eingangssignale vom exklusiven ODER-Glied EXOR2 abgeleitet werden, indem der gezeigte nichtinvertierte Signalausgang an den Signaleingang 1 und ein nicht gezeigter invertierter Signalausgang an den Signaleingang 0 des zusätzlichen Multiplexers angeschlossen werden. Der Ausgang dieses Multiplexers wird dann anstelle des Ausgangs des Multiplexers MUX1 an das exklusive ODER-Glied EXOR1 angeschlossen. Die Schaltung wird dadurch vereinfacht und insgesamt schneller.

Auch können die ODER-Glieder OR1 bis OR3 als Erweiterungsschaltungen an den Steuereingängen der Multiplexer MUX2 bis MUX4 ausgebildet sein, die schneller als normale ODER-Glieder arbeiten und ebenfalls weniger Aufwand erfordern.

Unabhängig davon ist das beschriebene Prinzip zur Ermittlung des Ergebnisparitätsbits $P_S$ in ungeänderter Weise auch für Subtrahierer verwendbar, da bei Invertierung aller Datenbits die Parität unverändert bleibt.

### Patentansprüche

1. Schaltungsanordnung zur Funktionsüberwachung eines arithmetische Operationen ausführenden Rechenwerkes, in welchem die als Binärworte mit einer Wortbreite von N Bit vorliegenden Operanden (A, B) ohne ihr jeweils ergänzend vorhandenes Paritätsbit ($P_A$, $P_B$) zu einem binären Ergebniswort (S) ohne ein ergänzendes Paritätsbit ($P_S$) verarbeitet werden, während das der weiteren Prüfung zugrundezulegende Paritätsbit ($P_S$) des Ergebniswortes (S) aus den Operandendaten und -paritäten nach der Gleichung $P_S = PA \# P_B \# P_{CIN}$ durch exklusive ODER-Verknüpfung (#) ermittelt wird, wobei $P_A$ das Paritätsbit des ersten Operanden (A), $P_B$ das Paritätsbit des zweiten Operanden (B) und $P_{CIN}$ das Paritätsbit der Eingangsüberträge ($CIN_i$) aller Bitstellen (i = 0, 1, 2 ..., N-2, N-1) darstellen, dadurch gekennzeichnet, daß in an sich bekannter Weise je Bitstelle (0, 1, 2 ..., N-2, N-1) durch UND-Verknüpfung (1) beider Operandenbits ($A_i$ und $B_i$) ein erstes Steuersignal ($G_i$) und durch ODER-Verknüpfung (V) beider Operandenbits ein zweites Steuersignal ($P_i$) erzeugt wird, daß ausgehend von der Bitstelle (0) niedrigster Wertigkeit in Richtung steigender Wertigkeit die Eingangsüberträge ($CIN_k$; k = 2, 4, 6, ... $\leq$ N-1) jeder zweiten Bitstelle (2, 4, 6, ... $\leq$ N-1) aus den allen niederwertigeren Bitstellen jeweils zugeordneten Steuersignalen ($P_i$, $G_i$) sowie aus dem von außerhalb der Schaltungsanordnung zugeführten Eingangsübertrag ($CIN_0$) der niederwertigsten Bitstelle (0) in an sich bekannter Weise gebildet werden, daß der niederwertigste Eingangsübertrag ($CIN_0$) sowie die anderen gebildeten Eingangsüberträge ($CIN_k$ = 2, 4, 6, ... $\leq$ N-1) jeweils mit den ihren Bitstellen (0, 2, 4, 6, ... $\leq$ N-1) zugehörigen Steuersignalen ($P_i$, $G_i$) entsprechend der Beziehung ($CIN_i \wedge \overline{P_i}$) $\vee$ ($\overline{CIN_i} \wedge G_i$) zu einem resultierenden Signal verknüpft werden, das im Ergebnis dem der exklusiven ODER-Verknüpfung jeweils eines der vorhandenen Eingangsüberträge ($CIN_0$ und $CIN_k$; k = 2, 4, 6 ... $\leq$ N-1) mit dem nicht vorhandenen Eingangsübertrag ($CIN_1$ bzw. $CIN_{(k+1)}$) der jeweils nächsthöheren Bitstelle (1, 3, 5 ... $\leq$ N-1) entspricht, und daß eine weitere gemeinsame exklusive ODER-Verknüpfung aller in der beschriebenen Weise gewonnenen resultierenden Signale das zur Erzeugung des Ergebnisparitätsbits ($P_S$) erforderliche Paritätsbit ($P_{CIN}$) der Eingangsüberträge ($CIN_i$) aller Bitstellen (0, 1, 2, ..., N-2, N-1) ergibt.

2. Schaltungsanordnung nach Anspruch 1, dadurch gekennzeichnet, daß die Verknüpfung entsprechend der Beziehung ($CIN_i \wedge \overline{P_i}$) $\vee$ ($\overline{CIN_i} \wedge G_i$) durch einen Multiplexer (z.B. MUX1) mit zwei Signaleingängen (0, 1) erfolgt, denen die beiden Steuersignale ($G_i$, $\overline{P_i}$) zugeführt werden, während der Eingangsübertrag ($CIN_i$) auf den Steuersignaleingang des Multiplexers einwirkt.

### Claims

1. Circuit arrangement for the functional monitoring of a computer executing arithmetic operations, in which the operands (A, B) in the form of binary words having a word length of N bits are processed without their respectively supplementing parity bit ($P_A$, $P_B$) into a binary result word (S) without a supplementary parity bit ($P_S$), while the parity bit ($P_S$) of the result word (S), on which further checking is based, is determined from the operand data and parities by an exclusive OR operation (#) in accordance with the equation $P_S = P_A \# P_B \# P_{CIN}$, where $P_A$ represents the parity bit of the first operand (A), $P_B$ represents the parity bit of the second operand (B) and $P_{CIN}$ represents the parity bit of the input carries ($CIN_i$) of all bit positions (i = 0, 1, 2 ..., N-2, N-1), characterized in that, in a way known per se, for each bit position (0, 1, 2, ..., N-2, N-1) a first control signal ($G_i$) is generated by an AND operation on both operand bits ($A_i$ and $B_i$) and a second control signal ($P_i$) is generated by an OR operation (V) on both operand bits, in that, starting from the bit position (0) of least significance and proceeding in the direction of increasing significance, the input carries ($CIN_k$; k = 2, 4, 6, ... $\leq$ N-1) of every second bit position (2, 4, 6, ... $\leq$ N-1) are formed in a way known per se from the control signals ($P_i$, $G_i$) respectively assigned to all the lower- order bit positions as well as from the input carry (CIN$_0$) of the least-significant bit position (0) fed from outside the circuit arrangement, in that the least-significant input carry (CIN$_0$) and the other formed input carries (CIN$_k$ = 2, 4, 6, ... ≤ N-1) are in ech case combined with the control signals (P$_i$, G$_i$) associated with their bit positions (0, 2, 4, 6, ... ≤ N-1) corresponding to the relationship (CIN$_i$ ∧ $\overline{P_i}$) ∨ ($\overline{CIN_i}$ ∧ G$_i$) to form a resulting signal which corresponds in the result to that of the exclusive OR operation in each case of one of the available input carries (CIN$_0$ and CIN$_k$; k = 2, 4, 6 ... ≤ N-1) with the unavailable input carry (CIN$_1$ or CIN$_{(k+1)}$) of the respectively next higher-order bit position (1, 3, 5, ... ≤ N-1), and in that a further common exclusive OR operation of all the resulting signals obtained in the way described produces the parity bit (P$_{CIN}$) of the input carries (CIN$_i$) of all the bit positions (0, 1, 2, ..., N-2, N-1), necessary for generation of the result parity bit (P$_S$).

2. Circuit arrangement according to Claim 1, characterized in that the operation corresponding to the relationship (CIN$_i$ ∧ $\overline{P_i}$) ∨ ($\overline{CIN_i}$ ∧ G$_i$) is performed by a multiplexer (e.g. MUX1) with two signals inputs (0, 1), to which the two control signals (G$_i$, $\overline{P_i}$) are fed, while the input carry (CIN$_i$) acts on the control signal input of the multiplexer.

**Revendications**

1. Montage pour contrôler le fonctionnement d'une unité de calcul exécutant des opérations arithmétiques, et dans lequel les opérandes (A, B) présents sous la forme de mots binaires possédant une largeur de mot égale à N bits, sont traités sans leur bit de parité (P$_A$, P$_B$), présent respectivement à titre de complément, pour former un mot de résultat binaire (S) sans bit de parité complémentaire (P$_S$), tandis que le bit de parité (P$_S$) du mot de résultat (S), qui est pris pour base pour la poursuite du contrôle, est déterminé à partir des données et des parités des opérandes conformément à la relation P$_S$ = P$_A$ # P$_B$ # P$_{CIN}$, au moyen d'une combinaison OU-Exclusif (∧), P$_A$ représentant le bit de parité du premier opérande (A), P$_B$ le bit de parité du second opérande (B) et P$_{CIN}$ le bit de parité des reports d'entrée (CIN$_i$) de toutes les positions binaires (i = 0, 1, 2 ..., N-2, N-1), caractérisé par le fait que, d'une manière connue en soi, pour chaque position binaire (0, 1, 2... N-2, N-1), un premier signal de commande (G$_i$) est produit au moyen d'une combinaison ET (∧) de deux bits d'opérandes (A$_i$ et B$_i$) et qu'un second signal de commande (P$_i$) est produit au moyen d'une combinaison OU (∨) de deux bits d'opérande, qu'à partir de la position binaire (0) de poids le plus faible, les reports d'entrée (CIN$_k$; k = 2, 4, 6, ... ≤ N-1) de chaque seconde position binaire (2, 4, 6, ... ≤ N-1) sont formés de façon connue en soi, dans la direction des poids croissants, à partir des signaux de commande (P$_i$, G$_i$) respectivement associés à toutes les positions binaires de poids inférieur, ainsi qu'à partir du report d'entrée (CIN$_0$), envoyé depuis l'extérieur du montage, de la position binaire de poids le plus faible (0), que le report d'entrée (CIN$_0$) de poids le plus faible ainsi que les autres reports d'entrée formés (CIN$_k$; k = 2, 4, 6, ... ≤ N-1) sont combinés respectivement aux signaux de commande (P$_i$, G$_i$), associés à leurs positions binaires (0, 2, 4, 6, ... ≤ N-1), en fonction de la relation (CIN$_i$ ∧ $\overline{P_i}$) ∨ ($\overline{CIN_i}$ ∧ G$_i$) pour former un signal résultant, qu'il en résulte à la combinaison OU-Exclusif correspond respectivement l'un des reports d'entrée présents (CIN$_0$ et CIN$_k$; k = 2, 4, 6 ... ≤ N-1) avec le report d'entrée (CIN$_1$ ou CIN$_{(k+1)}$), non présent, de la position binaire respectivement de poids immédiatement supérieur (1, 3, 5, ... ≤ N-1), et qu'une autre combinaison OU-Exclusif commune de tous les signaux résultants obtenus de la manière décrite fournit le bit de parité (P$_{CIN}$), nécessaire pour la production du bit de parité de résultat (P$_S$), de reports d'entrée (CIN$_i$) de toutes les positions binaires (0, 1, 2, ..., N-2, N-1).

2. Montage suivant la revendication 1, caractérisé par le fait que la combinaison réalisée conformément à la relation (CIN$_i$ ∧ $\overline{P_i}$) ∨ ($\overline{CIN_i}$ ∧ G$_i$) est réalisée par un multiplexeur (par exemple MUX1) comportant deux entrées de signaux (0, 1), auxquelles les deux signaux de commande (G$_i$, $\overline{P_i}$) sont envoyés, tandis que le report d'entrée (CIN$_i$) agit sur l'entrée des signaux de commande du multiplexeur.

EP 0 193 711 B1

# FIG 1

FIG 2

FIG 3

# FIG 4

IC3